# FASCICULE DE BREVET EUROPEEN

(11) **EP 0 926 375 B1**
(45) Date de publication et mention de la délivrance du brevet: **29.01.2003**
(21) Numéro de dépôt: 98402998.3
(22) Date de dépôt: 30.11.1998
(51) Int. Cl.: F16D 23/14

(54) **Butée de débrayage avec agrafes latérales de guidage et de liaison**
Kupplungsausrücklager mit seitlichen Halte- und Fürungsclips
Clutch release bearing with lateral guiding and connecting clips

(30) Priorité: 19.12.1997 FR 9716164; 25.03.1998 FR 9803700
(43) Date de publication de la demande: 30.06.1999
(73) Titulaire: SKF FRANCE, F-92140 Clamart (FR)
(72) Inventeur: Ponson, Frédéric, 37230 Luynes (FR); Arnault, Benoit, 37100 Tours (FR); Girardin, Hervé, 37100 Tours (FR)
(74) Mandataire: Casalonga, Axel

(56) Documents cités:
- EP-A- 0 196 966
- WO-A-81/00142
- FR-A- 2 600 386
- FR-A- 2 645 929
- GB-A- 2 290 362
- US-A- 5 009 300

## Description

La présente invention concerne le domaine des butées de débrayage, en particulier pour véhicule automobile.

Une butée de débrayage comporte généralement un roulement se composant d'une bague tournante et d'une bague fixe entre lesquelles sont disposées des billes régulièrement réparties dans le sens circonférentiel au moyen d'une cage, la bague tournante étant munie d'une surface d'attaque destinée à venir en contact avec l'extrémité de doigts composant le diaphragme de l'embrayage,
un élément de manoeuvre supportant le roulement et qui, sous l'action d'un organe de commande vient coulisser sur un tube-guide et déplacer axialement le roulement de butée pour actionner le diaphragme de l'embrayage,
des moyens d'auto-alignement, interposés entre la bague non tournante et l'élément de manoeuvre, lesdits moyens d'auto-alignement assurant généralement la liaison entre le roulement et l'élément de manoeuvre en autorisant un certain déplacement radial du roulement par rapport à l'élément de manoeuvre, ce qui permet au roulement de s'auto-aligner sur le diaphragme d'embrayage lorsque les axes de rotation de ces deux éléments ne sont pas parfaitement alignés au départ,
et un organe de commande apte à exercer sur l'organe de manoeuvre une poussée axiale qui sera transmise au diaphragme du mécanisme d'embrayage par l'intermédiaire du roulement de butée.

La butée de débrayage est ainsi apte à se déplacer axialement le long d'un tube-guide solidaire du carter de boîte de vitesses. L'organe de commande exerce sur l'élément de manoeuvre une poussée axiale transmise au diaphragme du mécanisme d'embrayage par l'intermédiaire du roulement de butée qui vient en appui axial sur le diaphragme. L'organe de commande réalisé généralement en tôle d'acier emboutie se présente souvent sous la forme d'une fourchette venant en appui sur l'organe de manoeuvre par deux doigts, ces deux doigts venant contacter l'élément de manoeuvre sur des surfaces d'appui aménagées sur une partie radiale de l'élément de manoeuvre, lesdites surfaces d'appui étant disposées symétriquement par rapport au tube-guide.

La partie radiale de l'élément de manoeuvre vient se raccorder sur une partie axiale dudit élément venant coulisser sur le tube-guide.

Dans les butées de débrayage conventionnelles, les surfaces d'appui de l'élément de manoeuvre sont généralement métalliques afin d'éviter une usure prématurée au niveau du contact avec les doigts de la fourchette de l'organe de commande car l'élément de manoeuvre est généralement réalisé par moulage d'un matériau synthétique tel que du polyamide éventuellement chargé d'un ou plusieurs additifs destinés par exemple à améliorer la résistance mécanique dudit élément de manoeuvre ou à améliorer son glissement sur le tube-guide.

On peut également réaliser l'élément de manoeuvre par moulage d'un métal léger tel que de l'aluminium.

Les surfaces d'appui peuvent être rapportées sur la partie radiale de l'élément de manoeuvre après le moulage de celui-ci ou bien peuvent être liées audit élément de manoeuvre par surmoulage.

Dans ce dernier cas, les surfaces d'appui métalliques peuvent être intégrées localement à la partie radiale de l'élément de manoeuvre ou bien ladite partie radiale et les surfaces d'appui sont constituées d'une seule et même pièce sous la forme d'une plaque métallique rigide disposée perpendiculairement à l'axe de la butée sur la partie axiale.

La butée de débrayage est liée axialement avec les doigts de fourchette par des moyens appropriés solidaires de l'élément de manoeuvre. Ce dernier est également lié angulairement avec l'organe de commande autour de l'axe de la butée afin d'éviter sa mise en rotation sur le tube-guide sous l'effet des couples de frottement internes du roulement dûs à la rotation de l'une des bagues de celui-ci. Cette liaison angulaire est souvent réalisée au moyen de deux facettes de guidage venant coopérer avec les bords internes parallèles des doigts de fourchette. Lors des manoeuvres de la butée, il se produit des frottements entre la fourchette et les facettes de guidage de l'élément de manoeuvre. Afin d'éviter une usure trop rapide en cette zone de frottement et des dysfonctionnements de la butée, on utilise souvent des agrafes métalliques rapportées sur l'organe de manoeuvre.

Le document FR-A-2 645 929 montre un exemple d'agrafe couramment utilisée pour résoudre ces problèmes de guidage avec liaison angulaire, d'usure et de retenue axiale de la butée par rapport à la fourchette. Les agrafes réalisent la solidarisation du roulement de butée sur l'élément de manoeuvre par pincement axial et comportent des surfaces radiales servant de zones d'appui pour les doigts de fourchette. Les agrafes comportent également des surfaces radiales planes assurant la solidarisation angulaire de l'élément de manoeuvre avec la fourchette autour de l'axe de la butée, évitant ainsi toute rotation de l'élément de manoeuvre par rapport au tube-guide. Un tel dispositif peut convenir aux butées dont l'élément de manoeuvre comporte une collerette radiale en matière plastique.

Mais de telles agrafes sont mal adaptées aux butées dont l'élément de manoeuvre comporte une partie radiale sous forme d'une collerette massive métallique réalisée par exemple en tôle d'acier épaisse et traitée, servant de plaque d'appui pour les doigts de fourchette. En effet, l'appui des doigts de fourchette se faisant directement sur ladite collerette, les surfaces radiales servant de zones d'appui pour les doigts de fourchette deviennent inutiles. D'autre part, la fixation et le positionnement d'agrafes sur un disque métallique épais, dur et lisse sont difficiles à réaliser, voire même impossibles lorsque la bague non tournante du roulement venant en appui d'un côté de la collerette métallique est de dimension radiale voisine de ladite collerette.

Le document FR-A-2 600 386 décrit une pièce en forme d'étrier servant d'interface entre une butée de débrayage et un organe de commande et comportant des surfaces servant de zones d'appui pour les doigts de fourchette qui sont inutiles dans le cas d'une collerette radiale métallique massive. De plus, ces pièces sont de forme complexe, peu aisées à manipuler et à mettre en place de façon automatisée en raison de leur très grande flexibilité et de leur tendance à s'emmêler mutuellement dans les boîtes ou les magasins où elles sont stockées.

La présente invention a pour objet de remédier aux inconvénients des dispositifs décrits ci-dessus en proposant de munir une butée de débrayage d'une paire d'agrafes de forme simple, économique à fabriquer, facile à manipuler et à mettre en place de façon automatique.

La présente invention a également pour objet des agrafes pouvant s'adapter à toutes les structures des parties radiales de l'élément de manoeuvre, qu'il s'agisse d'une collerette radiale métallique massive ou d'une partie radiale moulée en même temps que la partie axiale avec laquelle elle ne forme qu'une seule pièce, en matière plastique par exemple, et sur laquelle sont disposées des surfaces d'appui métalliques.

Le dispositif de butée de débrayage, selon l'invention, est du type comprenant un palier à roulement monté sur un élément de manoeuvre muni d'une partie axiale pouvant coulisser sur un tube-guide et d'une partie radiale sur laquelle vient en appui sur une première face un organe de commande pourvu de deux portions de contact sous la forme de doigts de contact disposés de part et d'autre de la partie axiale de l'élément de manoeuvre et, sur l'autre face opposée à la première face une bague non tournante du palier à roulement. Les doigts de contact sont pourvus de bords internes se faisant face. L'organe de commande est attelé avec l'élément de manoeuvre par deux agrafes, chaque agrafe comprenant une partie plane disposée perpendiculairement à la première face entre lesdits bords internes des doigts de contact et la partie axiale de l'élément de manoeuvre. La partie plane est prévue pour entrer en contact avec lesdits bords internes des doigts de contact. Chaque agrafe comprend des pattes d'accrochage pour la fixation de ladite agrafe sur la partie axiale de l'élément de manoeuvre.

On dispose ainsi d'agrafes de forme simple, adaptées à des butées de débrayage dont la collerette radiale est en contact direct avec les doigts de l'organe de commande et évitant l'usure prématurée de la partie axiale au niveau des zones de contact avec lesdits doigts de l'élément de manoeuvre.

Dans un mode de réalisation de l'invention, les pattes se raccordent à la partie plane à des extrémités opposées de ladite partie plane situées de part et d'autre d'un plan passant par l'axe de rotation de la butée et perpendiculaire à ladite partie plane, et sont élastiquement déformables dans le sens radial pour coopérer avec des moyens de retenue aménagés dans la partie axiale de l'élément de manoeuvre. La partie plane peut être perpendiculaire à une plaque d'appui de la partie radiale, la plaque d'appui étant en forme de disque métallique massif.

Dans un mode de réalisation de l'invention, les moyens de retenue comprennent au moins une excroissance radiale formant une butée axiale pour les agrafes, de façon qu'un éventuel déplacement axial d'une agrafe par rapport à la butée de débrayage soit bloqué d'un côté par la collerette radiale et de l'autre côté par ladite excroissance radiale.

Avantageusement, les moyens de retenue comprennent au moins une protubérance et un creux radiaux coopérant avec chaque patte pour la retenue radiale des agrafes. Chaque agrafe peut être clipsée radialement sur la partie axiale de l'élément de manoeuvre du côté opposé au roulement par rapport à la plaque d'appui.

Dans un mode de réalisation de l'invention, chaque agrafe comprend un rebord dirigé radialement vers l'extérieur et capable de retenir axialement les doigts de la fourchette.

Dans un mode de réalisation de l'invention, les agrafes sont reçues sur deux surfaces planes parallèles de la partie axiale de l'élément de manoeuvre.

Chaque agrafe peut comprendre une portion d'appui disposée entre la partie radiale de l'élément de manoeuvre et une portion de contact de l'organe de commande.

Chaque agrafe peut comprendre au moins une partie coudée en saillie radialement vers l'extérieur à partir de la partie plane, ladite partie coudée étant prévue entre la partie plane et une patte d'accrochage pour solidariser radialement l'élément de manoeuvre et l'organe de commande.

La présente invention sera mieux comprise à l'étude de la description détaillée de quelques modes de réalisation pris à titre d'exemples nullement limitatifs et illustrés sur les dessins annexés, sur lesquels :
la figure 1 est une vue d'une butée de débrayage conforme à l'invention, dont la moitié supérieure est en coupe axiale et dont la moitié inférieure est partiellement en coupe axiale et partiellement en vue extérieure ;

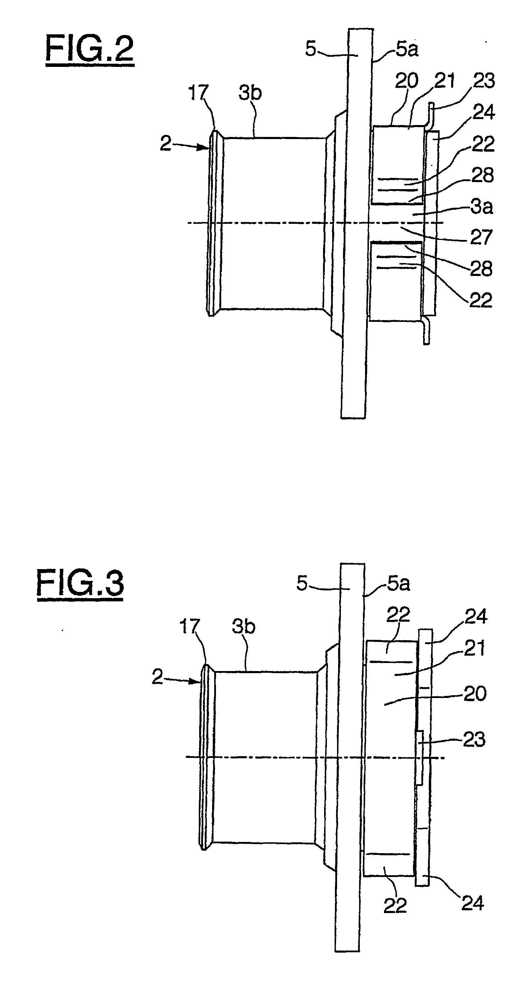

la figure 2 est une vue de côté de la butée de débrayage de la figure 1 ;
la figure 3 est une vue de dessus de la butée de débrayage de la figure 1 ;
la figure 4 est une vue de derrière de la butée de débrayage de la figure 1 ;
la figure 5 montre une variante de la figure 4;
la figure 6 est une vue similaire à la figure 1 d'une butée de débrayage selon un autre mode de réalisation de l'invention;
la figure 7 est une vue de face de l'agrafe de la butée de la figure 6; et
la figure 8 est un vue de derrière d'une butée de débrayage selon un autre mode de réalisation de l'invention.

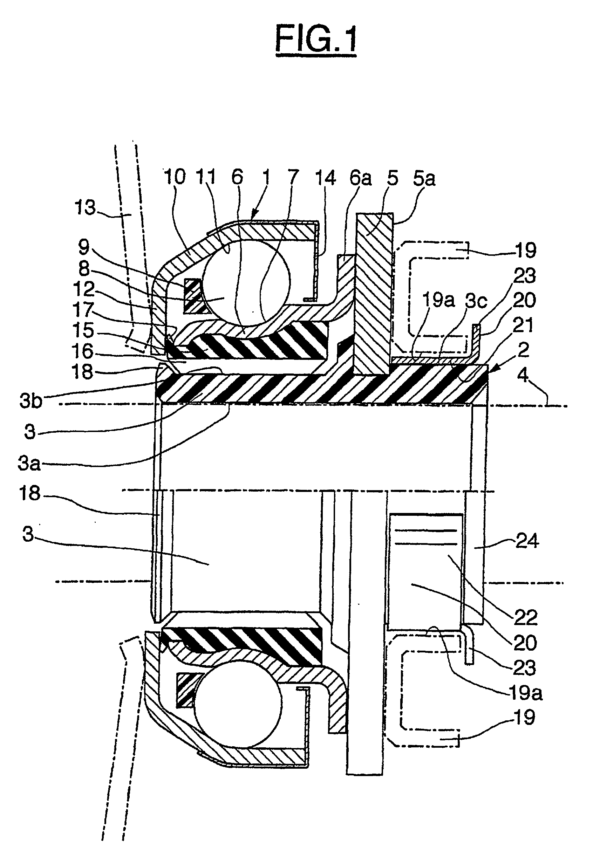

Comme on peut le voir sur la figure 1, la butée de débrayage conforme à l'invention comprend un palier à roulement 1 monté sur un élément de manoeuvre 2 lequel comporte une portion axiale 3 qui peut coulisser sur un tube-guide 4 représenté en traits mixtes, et une collerette radiale 5 orthogonale à l'axe de la portion axiale 3. La partie axiale 3 est réalisée en matériau synthétique surmoulé sur la collerette radiale 5 réalisée sous la forme d'un disque métallique circulaire épais disposé autour de la portion axiale 3.

La portion axiale 3 s'étend de chaque côté de la collerette radiale 5 et est pourvue d'un alésage 3a pour le coulissement sur le tube-guide 4.

D'un côté de la collerette 5, la portion axiale 3 se présente sous la forme d'une portion tubulaire 3b autour de laquelle sera monté le roulement de butée.

La portion axiale 3 se prolonge de l'autre côté de la collerette 5 et présente une surface extérieure 3c apte à recevoir des agrafes de guidage et d'attelage avec l'organe de commande de la butée.

Le palier à roulement 1 comprend une bague intérieure non tournante 6 à paroi mince réalisée par emboutissage d'une tôle ou d'un tube et présentant un chemin de roulement toroïdal 7 pour une rangée d'éléments roulants 8, par exemple des billes, maintenus dans une cage 9. La bague intérieure 6 comporte également une prolongation dirigée vers l'extérieur sous la forme d'une collerette radiale 6a qui vient en contact de frottement sur la surface frontale de la collerette radiale 5 dirigée vers l'embrayage.

Le palier à roulement 1 se complète par une bague extérieure 10 tournante également à paroi mince réalisée par emboutissage d'une tôle ou d'un tube qui présente un chemin de roulement toroïdal 11 pour les éléments roulants 8 ainsi qu'une portion radiale 12 qui vient en contact avec la surface des doigts du diaphragme 13 d'un dispositif d'embrayage non représenté. Lors du déplacement axial de l'ensemble de la butée sur le tube-guide 4, le roulement de butée peut ainsi actionner le dispositif d'embrayage. Le palier à roulement 1 est protégé par un flasque de protection 14 fixé sur la bague extérieure 10.

Un manchon en matière élastique 15, par exemple en élastomère ou en caoutchouc naturel, est disposé à l'intérieur de la bague interne 6 et présente une pluralité de nervures 16 parallèles à l'axe de la butée, dirigées vers l'intérieur et dont le bord libre interne entre en contact avec la surface extérieure de la portion tubulaire 3b de l'élément de manoeuvre 2.

Le manchon élastique 15 présente une lèvre annulaire 17 qui assure l'étanchéité du palier à roulement 1 en entrant en contact avec la portion radiale 12 de la bague extérieure 10. Une nervure annulaire 18 disposée à l'extrémité de la portion tubulaire 3b assure le maintien du palier 1 sur l'élément de manoeuvre 2 avant le montage sur le tube-guide 4. La portion axiale 3 de l'élément de manoeuvre 2 se prolonge également du côté de la collerette radiale 5, opposé au palier à roulement 1. De ce même côté, la collerette radiale 5 offre une surface d'appui Sa aux deux doigts parallèles 19 d'une fourchette formant l'organe de commande. La surface extérieure 3c de la portion axiale 3 située du côté de la surface d'appui 5a reçoit deux agrafes 20 permettant d'une part de protéger la surface extérieure 3c contre le contact de frottement avec les doigts 19, et d'autre part d'assurer l'attelage de la butée de débrayage avec l'organe de commande tout en interdisant la rotation de l'élément de manoeuvre 2 sur le tube-guide 4.

Chaque agrafe 20 comprend une partie plane 21 disposée perpendiculairement à la surface d'appui 5a de la collerette radiale 5 et entourant partiellement la surface extérieure 3c de la portion axiale 3. A ses deux extrémités libres situées de part et d'autre d'un plan passant par l'axe de rotation de la butée et perpendiculaire à ladite partie plane, la partie plane 21 se prolonge par une patte 22 servant à l'accrochage sur la surface extérieure 3c. A partir du bord de la partie plane 21 opposé axialement à la collerette radiale 5, s'étend un rebord 23 dirigé radialement vers l'extérieur de façon à former un moyen de retenue axiale d'un doigt 19 de la fourchette par rapport à la butée de débrayage à l'opposé de la collerette radiale 5.

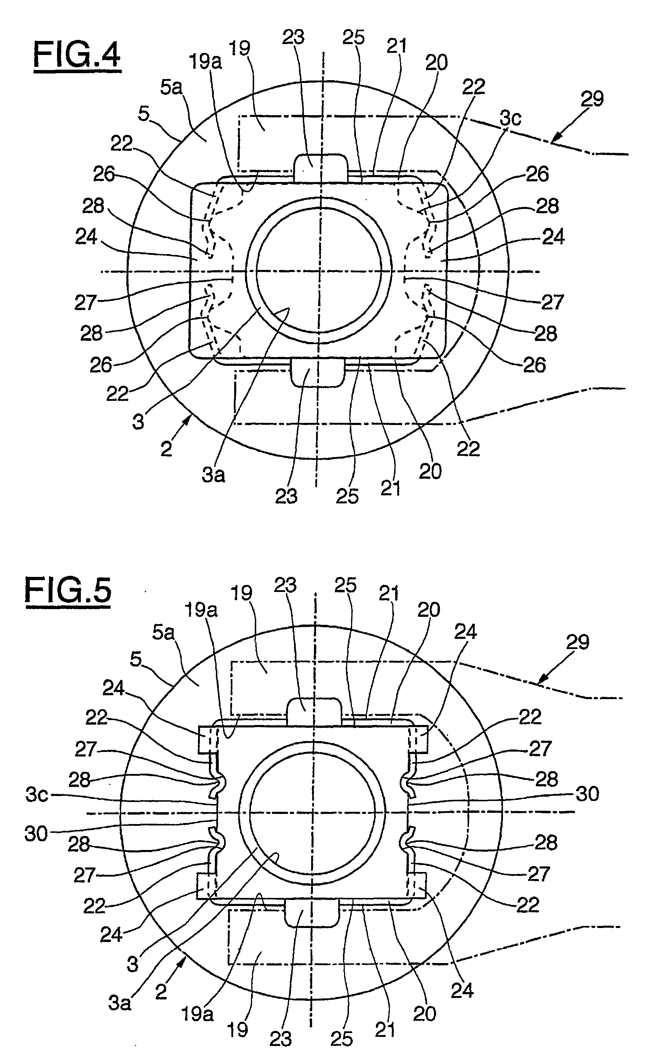

L'extrémité libre de la portion axiale 3 adjacente aux agrafes 20 est pourvue au niveau des pattes 22 de deux excroissances 24 dirigées radialement vers l'extérieur et s'étendant au-delà des pattes 22 qui sont ainsi maintenues axialement entre les excroissances 24 et la collerette radiale 5 ce qui constitue un moyen de retenue axiale des agrafes 20 par rapport à la butée de débrayage. Comme on peut le voir sur la figure 4, les excroissances radiales 24 confèrent à l'extrémité de la portion axiale 3 une forme sensiblement rectangulaire.

La surface 3c comprend deux surfaces planes 25 diamétralement opposées et parallèles entre elles, prévues pour être en contact avec la partie plane 21 des agrafes 20. Ces parties planes 21 permettent, en coopérant avec des bords internes 19a des doigts de contact parallèles 19 de la fourchette 29 (représentée en traits mixtes sur les figures 1 et 4) de réaliser un guidage avec solidarisation angulaire de l'élément de manoeuvre 2 par rapport à la fourchette de commande 29 autour de l'axe de la butée, évitant ainsi tout risque de rotation dudit élément de manoeuvre 2 sur le tube-guide 4.

Entre ces deux surfaces planes 25, la surface extérieure 3a présente un profil symétrique par rapport à l'axe de la butée de débrayage. Une protubérance 26 s'étend radialement vers l'extérieur dans un sens perpendiculaire à celui des rebords 23 des agrafes 20 et est disposée à proximité des surfaces planes 25 pour pouvoir coopérer avec une patte 22. Au-delà d'une protubérance 26, se trouve un creux 27 commun à deux protubérances 26 adjacentes. Ainsi, une agrafe 20 est disposée avec sa partie plane 21 en contact avec la surface plane 25 et chaque patte 22 de l'agrafe 20 est en contact avec une protubérance 26 de chaque côté de la surface plane 25. Chaque patte 22 est légèrement coudée au-delà de la protubérance 26 pour présenter une extrémité 28 rétrécie par rapport à la protubérance 26. Les deux protubérances 26 destinées à coopérer avec deux pattes 22 d'une agrafe 20 se trouvent plus éloignées que les deux extrémités 28 desdites pattes 22 ce qui permet la retenue de l'agrafe 20 sur la surface extérieure 3c. L'agrafe 20 offre le rebord radial 23 pour la retenue axiale des doigts 19 représentés sur la figure 1 par rapport à la butée de débrayage. L'agrafe 20 est elle-même retenue axialement par les excroissances 24 de l'extrémité de la portion axiale 3 qui s'étendent radialement au-delà des pattes 22.

Une agrafe 20 peut être montée sur la surface externe 3c par un simple mouvement radial qui amène l'agrafe 20 en direction de la surface plane 25. Lors d'un tel mouvement, l'extrémité 28 des pattes 22 entre en contact avec les protubérances 26 ce qui provoque l'écartement des deux pattes 22 de l'agrafe 20. Par élasticité, les extrémités 28 se resserrent après leur passage sur les excroissances 26 ce qui provoque la retenue radiale de l'agrafe 20 par rapport à l'élément de manoeuvre 2.

Sur la figure 5, on a également représenté en traits mixtes la fourchette 29. Les doigts 19 de la fourchette 29, viennent en contact avec la surface d'appui 5a de la collerette radiale 5 de part et d'autre de la portion axiale 3, chaque doigt 19 étant prévu pour entrer en contact avec la portion plane 21 d'une agrafe 20 par l'intermédiaire d'un bord interne rectiligne 19a. La surface extérieure 3a de la portion tubulaire 3 est légèrement différente de celle du mode de réalisation précédent, en ce sens qu'elle présente une section sensiblement carrée, les surfaces planes 25 formant deux côtés opposés du carré et les deux autres côtés opposés référencés 30 sont chacun pourvus de deux creux 27 dans lesquels les extrémités 28 des pattes 22 font saillie radialement vers l'intérieur, retenant ainsi radialement les agrafes 20. La portion du côté 30 disposée entre le creux 27 et la surface plane 25 correspondante constitue une protubérance pour les pattes 22 qui empêche un éventuel mouvement de démontage des agrafes 20 qui obligerait alors les pattes 22 à s'écarter. Les excroissances radiales 24 issues de l'extrémité libre de la portion axiale 3 sont ici au nombre de quatre disposées chacune aux extrémités des surfaces planes 30 sans dépasser des surfaces planes 25 pour éviter une éventuelle interférence avec les doigts 19.

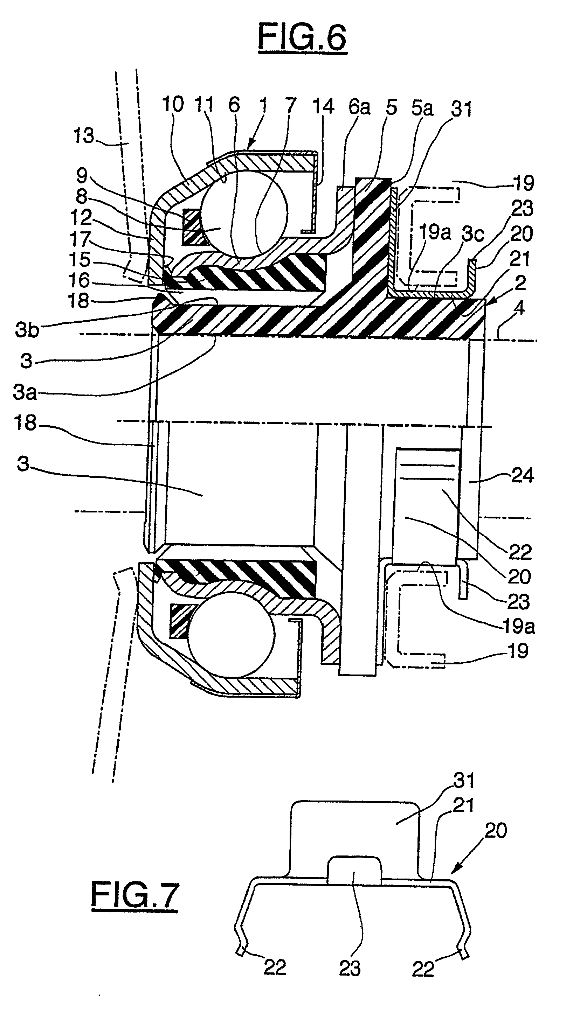

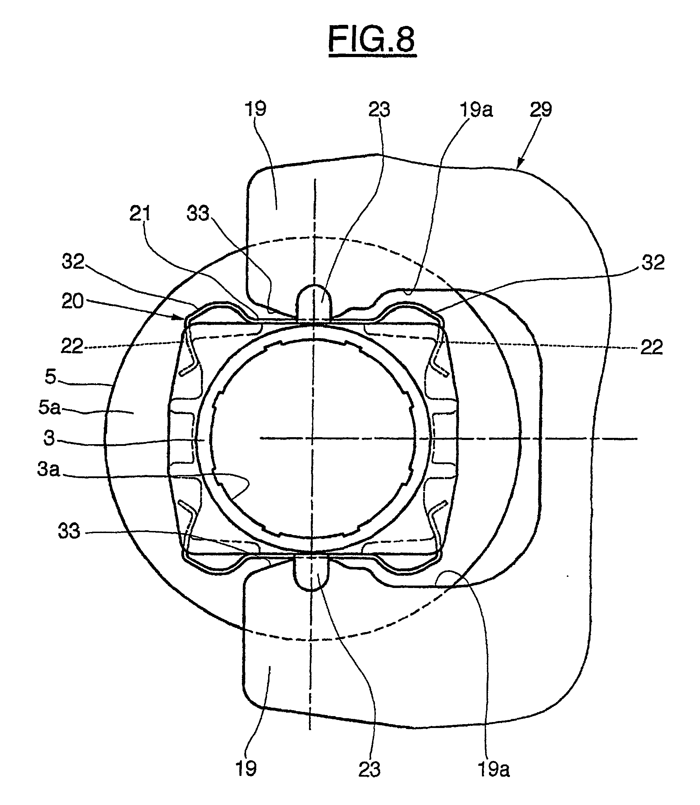

Le mode de réalisation illustré sur les figures 6 et 7 est similaire à celui de la figure 1, à ceci près que la collerette radiale 5 est réalisée en matériau synthétique d'une seule pièce avec la portion axiale 3. Chaque agrafe 20 comprend une partie radiale supplémentaire 31 servant à l'appui des doigts 19 sur la collerette radiale 5 tout en protégeant cette dernière. La partie d'appui 31 se raccorde à la partie plane 21 sur son bord opposé au rebord 23, du côté de la collerette radiale 5. Ce type d'agrafe est bien adapté aux éléments de manoeuvre à collerette radiale réalisée en matériau synthétique.

Sur la figure 8, on voit que chaque agrafe 20 est pourvue de deux coudes 32 disposés à chaque extrémité de la partie plane 21, entre la partie plane 21 et les pattes d'accrochage 22. Chaque coude 32 s'étend à l'opposé des pattes 22 par rapport au plan de la partie plane 21 et forme ainsi un bossage apte à coopérer avec une protubérance 33 formée sur le bord interne du doigt 19 pour assurer la retenue radiale de la butée par rapport à la fourchette. A titre de variante, une agrafe peut être prévue avec un seul coude.

On solidarise ainsi radialement les doigts de fourchette avec la butée afin, par exemple, de pouvoir manipuler aisément un tel ensemble avant et pendant son montage sur véhicule sans risquer une désolidarisation involontaire.

De préférence, afin d'éviter une orientation de la butée par rapport à la fourchette, l'agrafe sera symétrique et comportera deux coudes. On peut ainsi mettre en place les agrafes sur l'élément de manoeuvre, puis procéder ensuite au montage de la fourchette sur la butée en introduisant radialement cette dernière sur la butée.

Sous la pression exercée par les protubérances radiales de la fourchette, les coudes des agrafes s'effacent puis reviennent à leur forme initiale, assurant ainsi la retenue radiale de la butée sur la fourchette.

Toutefois, pour des impératifs de montage, il serait parfaitement possible d'avoir des coudes disposés de façon non symétrique et/ou de géométrie différente.

Les bords internes des doigts de fourchette destinés à coopérer avec la partie plane de l'agrafe seront aménagés sur des protubérances radiales dirigées vers l'axe de la butée.

Les coudes des agrafes forment ainsi une butée dans le sens radial pour les protubérances des doigts de fourchette et assurent une liaison radiale entre la butée et la fourchette.

On peut ainsi mettre en place les agrafes sur l'élément de manoeuvre et procéder ensuite au montage de la fourchette.

Pour une fourchette à deux doigts séparés parallèles, le montage peut se faire de deux façons :
- soit en introduisant obliquement les doigts de fourchette entre les coudes 32 et les rebords 23 des agrafes et en redressant ensuite la fourchette.
- soit en introduisant la fourchette radialement sur la butée lorsque les agrafes sont pourvues de protubérances radiales effaçables.

Dans ce dernier cas, il faut que les coudes des agrafes et les protubérances radiales des doigts de fourchette possèdent des profils appropriés (pentes et courbes) pour que, sous la pression exercée par les protubérances radiales internes de la fourchette, les coudes 32 des agrafes s'effacent puis reviennent à leur forme initiale, assurant ainsi la retenue radiale de la butée sur la fourchette.

On peut ainsi constituer un ensemble fourchette-butée facilement manipulable sans risque de démontage involontaire des pièces.

Bien entendu, ces modes de réalisation ne sont nullement limitatifs.

C'est ainsi que les deux doigts de contact de la fourchette pourraient se rejoindre à leur extrémité pour former une fourchette du type à lumière centrale.

Ainsi grâce à l'invention, les agrafes sont clipsées radialement sur une portion axiale de l'élément de manoeuvre à l'opposé du palier à roulement. Les agrafes permettent un contact direct entre la fourchette et la plaque d'appui formée par la collerette radiale tout en assurant la protection de la surface extérieure de la portion axiale de l'élément de manoeuvre, et l'attelage de la fourchette avec la butée de débrayage. Les agrafes peuvent donc ainsi assurer en toute sécurité leur fonction anti-usure, de guidage avec liaison angulaire et retenue axiale. Les agrafes sont de formes simples, peu onéreuses à fabriquer et faciles à manipuler. Leur mise en place sur l'élément de manoeuvre se fait par simple pression radiale et est donc facile à réaliser aussi bien manuellement que de façon automatique.

## Revendications

1. Dispositif de butée de débrayage du type comprenant un palier à roulement (1) monté sur un élément de manoeuvre (2) muni d'une partie axiale (3) pouvant coulisser sur un tube-guide (4) et d'une partie radiale (5) sur laquelle vient en appui sur une première face un organe de commande pourvu de deux portions de contact (19) sous la forme de doigts de contact disposés de part et d'autre de la partie axiale de l'élément de manoeuvre, et sur l'autre face opposée à la première face une bague non tournante du palier à roulement, les doigts de contact étant pourvus de bords internes (19a) se faisant face, l'organe de commande étant attelé avec l'élément de manoeuvre par deux agrafes (20), chaque agrafe comprenant une partie plane (21) disposée perpendiculairement à la première face entre lesdits bords internes des doigts de contact et la partie axiale de l'élément de manoeuvre, ladite partie plane (21) étant prévue pour entrer en contact avec lesdits bords internes des doigts de contact, **caractérisé par le fait que** chaque agrafe comprend des pattes d'accrochage (22) pour la fixation de la dite agrafe sur la partie axiale de l'élément de manoeuvre.

2. Dispositif selon la revendication 1, **caractérisé par le fait que** les pattes se raccordent à la partie plane à des extrémités opposées de ladite partie plane située de part et d'autre d'un plan passant par l'axe de rotation de la butée et perpendiculaire à ladite partie plane, et sont élastiquement déformables dans le sens radial pour coopérer avec des moyens de retenue aménagés dans la partie axiale de l'élément de manoeuvre.

3. Dispositif selon la revendication 1 ou 2, **caractérisé par le fait que** la partie plane est perpendiculaire à une plaque d'appui de ladite partie radiale, la plaque d'appui étant en forme de disque métallique massif.

4. Dispositif selon l'une quelconque des revendications précédentes, **caractérisé par le fait que** les moyens de retenue comprennent au moins une excroissance radiale (24) formant une butée axiale pour les agrafes.

5. Dispositif selon l'une quelconque des revendications précédentes, **caractérisé par le fait que** les moyens de retenue comprennent au moins une protubérance (26) et un creux (27) radiaux coopérant avec les pattes pour la retenue radiale des agrafes.

6. Dispositif selon l'une quelconque des revendications précédentes, **caractérisé par le fait que** chaque agrafe est clipsée radialement sur la partie axiale de l'élément de manoeuvre du côté opposé au roulement par rapport à la plaque d'appui.

7. Dispositif selon l'une quelconque des revendications précédentes, **caractérisé par le fait que** chaque agrafe comprend un rebord (23) dirigé radialement vers l'extérieur et capable de retenir axialement les doigts de la fourchette.

8. Dispositif selon l'une quelconque des revendications précédentes, **caractérisé par le fait que** les agrafes sont reçues sur deux surfaces planes parallèles de la partie axiale de l'élément de manoeuvre.

9. Dispositif selon l'une quelconque des revendications précédentes, **caractérisé par le fait que** l'organe de commande est pourvu de deux doigts de contact comportant une extrémité libre.

10. Dispositif selon l'une quelconque des revendications 1 à 8, **caractérisé par le fait que** l'organe de commande est pourvu de deux doigts de contact dont les extrémités se rejoignent pour former une lumière centrale.

11. Dispositif selon l'une quelconque des revendications précédentes, **caractérisé par le fait que** chaque agrafe comprend une partie d'appui disposée entre la partie radiale de l'élément de manoeuvre et une portion de contact de l'organe de commande.

12. Dispositif selon l'une quelconque des revendications précédentes, **caractérisé par le fait que** chaque agrafe comprend au moins une partie coudée 32 en saillie radialement vers l'extérieur à partir de la partie plane, ladite partie coudée étant prévue entre la partie plane et une patte d'accrochage pour solidariser radialement l'élément de manoeuvre et l'organe de commande.

## Claims

1. Clutch release bearing device of the type comprising a rolling bearing (1) mounted on an operating element (2) equipped with an axial part (3) able to slide on a guide tube (4) and with a radial part (5), against a first face of which there bears a control member provided with two contact portions (19) in the form of contact fingers arranged one on each side of the axial part of the operating element, and against the opposite face to the first face of which there bears a non-rotating race of the rolling bearing, the contact fingers being provided with facing internal edges (19a), the control member being coupled to the operating element by two clips (20), each clip comprising a flat part (21) arranged at right angles to the first face between the said internal edges of the contact fingers and the axial part of the operating element, the said flat part (21) being designed to come into contact with the said internal edges of the contact fingers, **characterized in that** each clip comprises catching tabs (22) for fixing the said clip to the axial part of the operating element.

2. Device according to Claim 1, **characterized in that** the tabs connect to the flat part at opposite ends of the said flat part situated on each side of a plane passing through the axis of rotation of the thrust bearing and perpendicular to the said flat part, and are elastically deformable in the radial direction to collaborate with retaining means formed in the axial part of the operating element.

3. Device according to Claim 1 or 2, **characterized in that** the flat part is at right angles to a bearing plate of the said radial part, the bearing plate being in the shape of a solid metal disc.

4. Device according to any one of the preceding claims, **characterized in that** the retaining means comprise at least one radial protrusion (24) forming an axial stop for the clips.

5. Device according to any one of the preceding claims, **characterized in that** the retaining means comprise at least one radial projection (26) and one radial recess (27) collaborating with the tabs for radially retaining the clips.

6. Device according to any one of the preceding claims, **characterized in that** each clip is clipped radially onto the axial part of the operating element on the opposite side to the rolling bearing with respect to the bearing plate.

7. Device according to any one of the preceding claims, **characterized in that** each clip comprises a rim (23) directed radially outwards and capable of axially retaining the fingers of the fork.

8. Device according to any one of the preceding claims, **characterized in that** the clips are 'received on two parallel flat surfaces of the axial part of the operating element.

9. Device according to any one of the preceding claims, **characterized in that** the control member is provided with two contact fingers comprising a free end.

10. Device .according to any one of Claims 1 to 8, **characterized in that** the control member is provided with two contact fingers the ends of which meet to form a central slot.

11. Device according to any one of the preceding claims, **characterized in that** each clip comprises a bearing part arranged between the radial part of the operating element and a contact portion of the control member.

12. Device according to any one of .the preceding claims, **characterized in that** each clip comprises at least one elbowed part 32 projecting radially outwards from the flat part, the said elbowed part being provided between the flat part and a catching tab for radially securing the operating element and the control member.

## Patentansprüche

1. Kupplungsausrücklageranordnung in der Bauart mit einem Wälzlager (1), das an einem Ausrückelement (2) angebracht ist, das einen auf einem Führungsrohr (4) verschieblichen axialen Abschnitt (3) und einen radialen Abschnitt (5) aufweist, mit dem an einer ersten Fläche ein Betätigungselement, das mit zwei Berührungsbereichen (19) ausgebildet ist, die in Gestalt von Ausrückfingern beiderseits des axialen Abschnitts des Ausrückelements angeordnet sind, in Anlage kommt, und an dessen der ersten Fläche gegenüberliegenden weiteren Fläche ein stillstehender Ring des Wälzlagers in Anlage kommt, wobei die Ausrückfinger mit einander gegenüberliegenden inneren Rändern (19a) versehen sind, das Betätigungselement mittels zweier Klammern (20) an das Ausrückelement angehängt ist und jede der Klammern einen zwischen den inneren Rändern der Ausrückfinger und dem axialen Abschnitt des Ausrückelements senkrecht zu der ersten Fläche angeordneten ebenen Abschnitt (21) aufweist, der geeignet gestaltet ist, um mit den inneren Rändern der Ausrückfinger in Berührung zu kommen, **dadurch gekennzeichnet, dass** zu jeder der Klammern Haltefüße (22) gehören, die zur Befestigung der betreffenden Klammer an dem axialen Abschnitt des Ausrückelements dienen.

2. Vorrichtung nach Anspruch 1, **dadurch gekennzeichnet, dass** sich die Füße an entgegengesetzten Enden des ebenen Abschnitts beiderseits einer durch die Rotationsachse des Ausrücklagers und senkrecht zu dem ebenen Abschnitt verlaufenden Ebene an den ebenen Abschnitt anschließen und in radialer Richtung elastisch verformbar sind, um mit in dem axialen Abschnitt des Ausrückelements angeordneten Befestigungsmitteln zusammenwirken.

3. Vorrichtung nach Anspruch 1 oder 2, **dadurch gekennzeichnet, dass** der ebene Abschnitt senkrecht zu einer Anlageplatte des radialen Abschnitts angeordnet ist, wobei die Anlageplatte als eine massive Metallscheibe ausgebildet ist.

4. Vorrichtung nach einem der vorhergehenden Ansprüche, **dadurch gekennzeichnet, dass** die Befestigungsmittel mindestens einen radialen Fortsatz (24) aufweisen, der ein axiales Widerlager für die Klammern bildet.

5. Vorrichtung nach einem der vorhergehenden Ansprüche, **dadurch gekennzeichnet, dass** die Befestigungsmttel mindestens einen radialen Vorsprung (26) und eine radiale Vertiefung (27) umfassen, die mit den Haltefüßen zusammenwirken, um für den radialen Halt der Klammern zu sorgen.

6. Vorrichtung nach einem der vorhergehenden Ansprüche, **dadurch gekennzeichnet, dass** jede der Klammern auf der bezüglich der Anlageplatte dem Wälzlager abgewandten Seite auf dem axialen Abschnitt des Ausrückelements in radialer Richtung aufgeklippt ist.

7. Vorrichtung nach einem der vorhergehenden Ansprüche, **dadurch gekennzeichnet, dass** jede Klammer eine in radialer Richtung nach außen weisende Schulter (23) umfasst, die dazu dient, die Finger der Kupplungsgabel in axialer Richtung zu halten.

8. Vorrichtung nach einem der vorhergehenden Ansprüche, **dadurch gekennzeichnet, dass** die Klammern auf zwei parallel zueinander verlaufenden ebenen Flächen des axialen Abschnitts des Ausrückelements aufgenommen sind.

9. Vorrichtung nach einem der vorhergehenden Ansprüche, **dadurch gekennzeichnet, dass** das Betätigungselement mit zwei Ausrückfingern ausgebildet ist, die jeweils ein freies Ende aufweisen.

10. Vorrichtung nach einem der Ansprüche 1 bis 8, **dadurch gekennzeichnet, dass** das Betätigungselement mit zwei Ausrückfingern ausgebildet ist, dessen Enden zusammenlaufen, um eine mittige Öffnung zu bilden.

11. Vorrichtung nach einem der vorhergehenden Ansprüche, **dadurch gekennzeichnet, dass** jede der Klammern einen zwischen dem radialen Abschnitt des Ausrückelements und einem Berührungsabschnitt des Betätigungselements angeordneten Anlageabschnitt aufweist.

12. Vorrichtung nach einem der vorhergehenden Ansprüche, **dadurch gekennzeichnet, dass** jede Klammer mindestens einen gekrümmten Abschnitt 32 aufweist, der von dem ebenen Abschnitt aus in radialer Richtung nach außen vorspringt, wobei der gekrümmte Abschnitt zwischen dem ebenen Abschnitt und einem Haltefuß angeordnet ist, um das Ausrückelement und das Betätigungselement in radialer Richtung zu fixieren.
